# EUROPEAN PATENT SPECIFICATION

(11) **EP 2 868 191 B1**
(45) Date of publication and mention of the grant of the patent: **22.02.2017**
(21) Application number: 13809949.4
(22) Date of filing: 28.06.2013
(51) Int. Cl.: A01G 9/08, A01G 9/10

(54) **TRANSPLANTING DEVICE AND TRANSPLANTING METHOD**
TRANSPLANTATIONSVORRICHTUNG UND TRANSPLANTATIONSVERFAHREN
DISPOSITIF DE TRANSPLANTATION ET PROCÉDÉ DE TRANSPLANTATION

(30) Priority: 29.06.2012 JP 2012147512
(43) Date of publication of application: 06.05.2015
(73) Proprietor: Tsubakimoto Chain Co., Osaka 530-0005 (JP)
(72) Inventor: OHARA, Hitoshi, Osaka-shi Osaka 530-0005 (JP); HIRAI, Tatsuya, Osaka-shi Osaka 530-0005 (JP); KOUNO, Kouji, Osaka-shi Osaka 530-0005 (JP); OKAZAKI, Yu, Osaka-shi Osaka 530-0005 (JP)
(74) Representative: dompatent von Kreisler Selting Werner - Partnerschaft von Patent- und Rechtsanwälten mbB
(86) International application number: PCT/JP2013/067752
(87) International publication number: WO 2014/003152

(56) References cited:
- JP-A- H0 799 852
- JP-A- H07 147 857
- NL-A- 7 808 459

## Description

### TECHNICAL FIELD

The present invention relates to a plant transplanting device and a transplanting method.

### BACKGROUND ART

In recent years, in the field of agriculture, since crops is allowed to be cultivated by using a small amount of manpower, cultivation techniques employing machines and devices are introduced. Further, demands for crops of low agricultural chemicals and high quality are increasing. In view of such a background, cultivation of crops in plant factories has been started. In such plant factories, the amount of use of agricultural chemicals is administered and the temperature, the humidity, the amount of light, the light quality, and the like are adjusted so that crops having high nutritive values are allowed to be cultivated under a desired environment.

In general, in a plant factory, a panel having a plurality of through holes is provided. Then, pots containing culture medium are inserted into the through holes. A plant is planted in the culture medium. Then, a water flowing hole through which water passes is provided in the bottom part of the pot. The bottom part of the pot is immersed in water containing chemical liquids and hence the culture medium absorbs the water having entered through the water flowing hole. The plant absorbs the water so as to grow.

In accordance with growth of a plant, branches and leaves stretch out horizontally. Thus, a possibility arises that plants in adjacent pots interfere with each other. In order to avoid this, starting at the stage of seeding, the interval between adjacent pots may be set sufficiently long to avoid the interference. However, this limits the number of crops allowed to be produced on one panel and hence reduces the production efficiency.

Patent Documents 1 and 2 disclose cultivation devices in which cultivation is performed in pods aligned in one row in the inside of a single cultivation unit and then, at a stage that the plants in the row have grown to some extent, successively, the plants are moved to the next row. The distance between adjacent rows is appropriately set up such that the plants may not interfere with each other.

Patent Document 3 discloses a cultivation device employing a plurality of cultivation panels. In each cultivation panel, holes into which pots are to be inserted are opened in a zigzag form. The hole interval is different between cultivation panels. Thus, in accordance with the degree of growth of the plants, transplanting is performed from a cultivation panel having a narrow hole interval to a cultivation panel having a wide hole interval.

Patent Document 4 discloses a cultivation device in which transplanting is performed from a settled planting panel to a growth panel. The settled planting panel has holes into which pots are to be inserted in a grid form. The growth panel has holes in a zigzag form.

### PRIOR ART REFERENCES

### Patent Documents

Patent Document 1: Japanese Patent Application Laid-Open Publication No. H2-190123
Patent Document 2: Japanese Patent Application Laid-Open Publication No. H2-276515
Patent Document 3: Japanese Patent Application Laid-Open Publication No. H7-147857
Patent Document 4: Japanese Patent Application Laid-Open Publication No. H11-289820

Patent document NL 7 808 459 A also discloses a transplanting device.

### SUMMARY OF THE INVENTION

### PROBLEM TO BE SOLVED BY THE INVENTION

In the cultivation devices described in Patent Documents 1 and 2, harvesting is performed for each row and hence a low production efficiency is resulted in. Further, the distance between rows need be adjusted appropriately and hence a high administration cost is caused.

Further, in the cultivation devices described in Patent Documents 3 and 4, the number of plants transplanted at one time of work is small. Further, the transplanting method is complicated and it takes a long time to complete the transplanting.

Further, recently, a time schedule in which work times for seeding, transplanting, and maintenance administration are assigned is set up and then plants are produced in accordance with this time schedule. Thus, the transplanting work need be completed within the assigned time.

The present invention has been devised in view of such situations. An object thereof is to provide a transplanting device and a transplanting method in which a large number of times of transplanting are allowed to be achieved at one time of work in a simple method.

### MEANS FOR SOLVING THE PROBLEM

The transplanting device according to the present invention is characterized by a transplanting device performing transplanting between a plurality of culture medium boards cultivating a plurality of plants planted in an aligned manner, including a transplanting mechanism transplanting the plants, wherein the transplanting mechanism performs alternately a step of arranging plants having been arranged in a grid form on a culture medium board of transplanting source, into a zigzag form on a culture medium board of transplanting destination and a step of arranging plants having been arranged in a zigzag form on a culture medium board of transplanting source, into a grid form on a culture medium board of transplanting destination.

The transplanting device according to the present invention is characterized in that the step of arranging plants having been arranged in a grid form on a culture medium board of transplanting source, into a zigzag form on a culture medium board of transplanting destination is performed first.

The transplanting device according to the present invention is characterized in that the culture medium board includes a panel provided with locking holes and non-locking holes arranged in a grid form or a zigzag form and respectively locking and non-locking supporting members supporting individual plants, and that the transplanting mechanism includes a lift lifting up the panel so as to transfer the supporting members locked in the locking holes.

The transplanting device according to the present invention is characterized in that the transplanting mechanism includes: plural pieces of holding means holding a supporting member supporting each plant; and driving means of moving each holding means, and that the driving means moves each holding means in accordance with an arrangement interval of the plants in the culture medium board of transplanting destination.

The transplanting device according to the present invention is characterized in that the driving means moves each holding means individually.

The transplanting device according to the present invention is characterized in that the driving means includes a linear motor.

The transplanting device according to the present invention is characterized by including a linkage mechanism linking individual holding means such that an interval between the holding means becomes equal to the arrangement interval.

The transplanting device according to the present invention is characterized in that the transplanting mechanism extracts a plant from an edge portion side of the culture medium board of transplanting source, then starts transplanting from a center portion of the culture medium board of transplanting destination, and then performs the transplanting successively toward an edge portion side.

The transplanting method according to the present invention is characterized by a transplanting method performed between a plurality of culture medium boards cultivating a plurality of plants provided in an aligned manner, including: a step of arranging plants having been arranged in a grid form on a culture medium board of transplanting source, into a zigzag form on a culture medium board of transplanting destination; and a step of arranging plants having been arranged in a zigzag form on a culture medium board of transplanting source, into a grid form on a culture medium board of transplanting destination, wherein both steps described above are performed alternately.

The transplanting method according to the present invention is characterized in that the step of arranging into a zigzag form the plants having been arranged in a grid form is executed first.

The transplanting method according to the present invention is characterized in that the supporting member locked to the locking hole is transferred in a state that a panel that is provided with locking holes and non-locking holes arranged in a grid form or a zigzag form and respectively locks and non-locks supporting members supporting individual plants and that is provided in the culture medium board of transplanting source is lifted up.

The transplanting device according to the present invention is characterized by a transplanting device performing transplanting between a plurality of culture medium boards cultivating a plurality of plants provided in an aligned manner, including a transplanting mechanism extracting a plant from an edge portion side of the culture medium board of transplanting source, then starting transplanting from a center portion of the culture medium board of transplanting destination, and then performing the transplanting successively toward an edge portion side.

The transplanting method according to the present invention is characterized by a transplanting method performed between culture medium boards cultivating a plurality of plants provided in an aligned manner, including a step of extracting a plant from an edge portion side of the culture medium board of transplanting source, then starting transplanting from a center portion of the culture medium board of transplanting destination, and then performing the transplanting successively toward an edge portion side.

In the present invention, when transplanting is to be performed between culture medium boards, a step of arranging into a zigzag form the plants having been arranged in a grid form and a step of arranging into a grid form the plants having been arranged in a zigzag form are repeated. Then, at each time that the one step is performed, the plants arranged on the culture medium board is reduced into half.

In the present invention, the processing is started from the step of arranging into a zigzag form the plants having been arranged in a grid form. Further, a larger number of seeds are arranged on the culture medium board in comparison with a case that arrangement in a zigzag form is adopted at the time of seeding.

In the present invention, when the panel provided in the transplanting source is moved, only plants locked in the locking holes are transplanted to the culture medium board of transplanting destination and plants arranged in the non-locking holes remain in the transplanting source.

In the present invention, each plant is held and extracted individually from the culture medium board of transplanting source and then transplanting is performed in a manner that the distance between the plants is adjusted to the arrangement interval in the transplanting destination.

In the present invention, the interval between the holding means is allowed to be set up arbitrarily. Thus, even when the interval between the plants is different between the culture medium boards of the transplanting source and of the transplanting destination, flexible processing is allowed. Further, in association with growth of the plants, transplanting work is to be performed in a plurality of times. Then, since the interval between the holding means is allowed to be set up arbitrarily, the same mechanism is allowed to be used in each occasion of the transplanting work. Further, even in a case that the plant interval varies depending on the portion of the culture medium board like a case that the plant interval is reduced only in an edge portion, the interval between the holding means is allowed to be set up in accordance with the plant interval in each portion.

In the present invention, the linear motor individually moves each holding means so as to realize a situation that the interval between the holding means is set up arbitrarily.

In the present invention, the distance between the holding means is set forth by the linkage mechanism so that the distance between the plants is easily and rapidly set equal to the arrangement interval in the transplanting destination.

In the present invention, extraction of the plants is started from an edge portion in the culture medium board of transplanting source and then transplanting is started from the center portion in the culture medium board of transplanting destination. If extraction were started from the center portion, a possibility would arise that the transplanting mechanism goes into contact with a plant arranged on an edge portion side and thereby damages it. Further, if transplanting were started from an edge portion side, a possibility would arise that, when transplanting is to be performed in the center portion side, the transplanting mechanism goes into contact with an already transplanted plant and thereby damages it. When transplanting is performed in the procedure described above, damage to the plant is avoided.

### EFFECT OF THE INVENTION

In the transplanting device and the transplanting method according to the present invention, when transplanting is to be performed between culture medium boards, a step of arranging into a zigzag form the plants having been arranged in a grid form and a step of arranging into a grid form the plants having been arranged in a zigzag form are repeated so that, at each time that such one step is performed, the number of plants arranged on the culture medium board is reduced into half. That is, a large number of times of transplanting are allowed to be realized simply and rapidly at one step.

### BRIEF DESCRIPTION OF THE DRAWINGS

FIG. 1 is a schematic diagram illustrating a transplanting device according to Embodiment 1.
FIG. 2A is a process chart illustrating a transplanting step.
FIG. 2B is a process chart illustrating a transplanting step.
FIG. 2C is a process chart illustrating a transplanting step.
FIG. 2D is a process chart illustrating a transplanting step.
FIG. 3A is a schematic diagram illustrating a holding panel to be transferred.
FIG. 3B is a schematic diagram illustrating a holding panel to be transferred.
FIG. 4 is an explanation diagram describing a change in an interval between pots in association with transplanting.
FIG. 5 is an explanation diagram describing a change in an interval between pots in association with transplanting.
FIG. 6 is a schematic diagram illustrating a transplanting device according to Embodiment 2.
FIG. 7A is a plan view schematically illustrating a hand mechanism contained in a housing of a Y-movement mechanism.
FIG. 7B is a plan view schematically illustrating a hand mechanism contained in a housing of a Y-movement mechanism.
FIG. 8 is a schematic diagram illustrating a linear motor part of a hand mechanism.
FIG. 9A is an explanation diagram describing operation of a transplanting mechanism.
FIG. 9B is an explanation diagram describing operation of a transplanting mechanism.
FIG. 9C is an explanation diagram describing operation of a transplanting mechanism.
FIG. 9D is an explanation diagram describing operation of a transplanting mechanism.
FIG. 10A is a plan view schematically illustrating another Implementation Example 1 of a hand mechanism.
FIG. 10B is a plan view schematically illustrating another Implementation Example 1 of a hand mechanism.
FIG. 11A is a plan view schematically illustrating another Implementation Example 2 of a hand mechanism.
FIG. 11B is a plan view schematically illustrating another Implementation Example 2 of a hand mechanism.
FIG. 12A is a plan view schematically illustrating another Implementation Example 3 of a hand mechanism.
FIG. 12B is a plan view schematically illustrating another Implementation Example 3 of a hand mechanism.
FIG. 13A is a side view schematically illustrating another Implementation Example 3 of a hand mechanism.
FIG. 13B is a side view schematically illustrating another Implementation Example 3 of a hand mechanism.
FIG. 14A is an explanation diagram describing a transplanting procedure.
FIG. 14B is an explanation diagram describing a transplanting procedure.
FIG. 14C is an explanation diagram describing a transplanting procedure.
FIG. 14D is an explanation diagram describing a transplanting procedure.

### MODE OF IMPLEMENTING THE INVENTION

### (Embodiment 1)

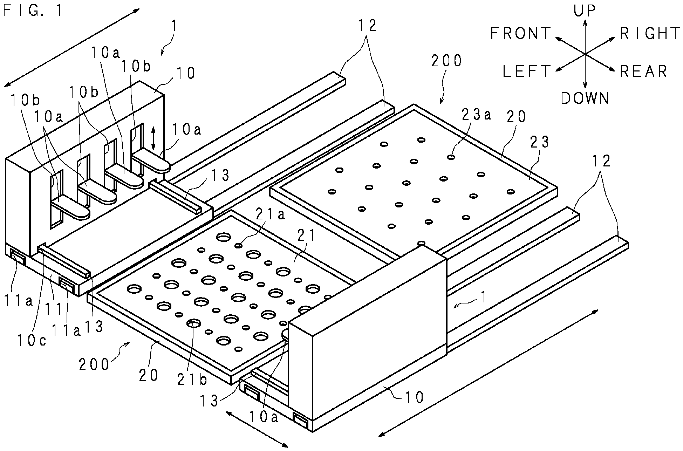

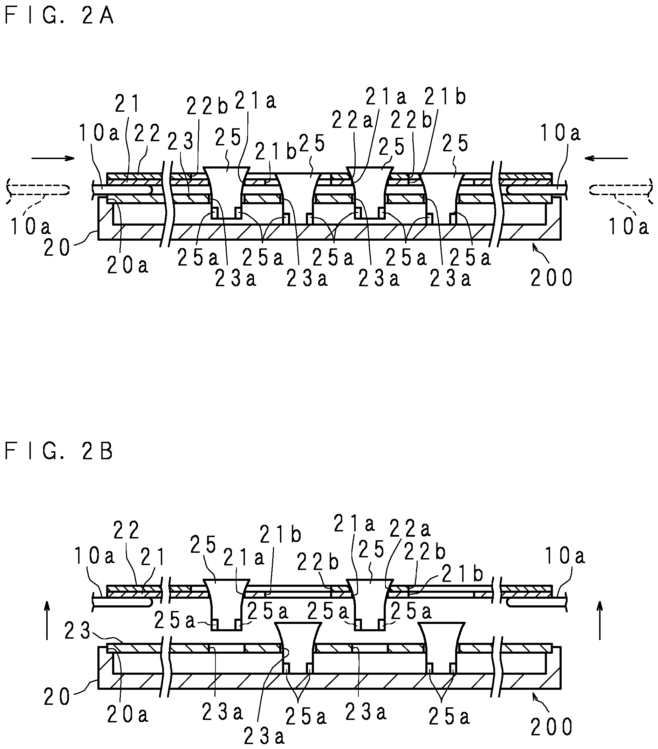

Detailed description is given below with reference to the drawings illustrating a transplanting device according to Embodiment 1 of the present invention. FIG. 1 is a schematic diagram illustrating the transplanting device. FIGS. 2A to 2D are process charts illustrating transplanting steps. In FIG. 1, for simplicity of understanding of the configuration of the transplanting device, a second transfer panel 22 is not illustrated.

The transplanting device includes two transplanting mechanisms 1, 1 transplanting plants. The transplanting mechanism 1 includes two Y-rails 12, 12 extending in the right and left directions. The Y-rails 12, 12 are provided in parallel to each other in the frontward and rearward directions. An X-moving plate 11 movable in the right and left directions is provided on the Y-rails 12. The X-moving plate 11 includes two fitting grooves 11a, 11a in the lower face. Then, the Y-rails 12, 12 are fit into the fitting grooves 11a, 11a in a slidable manner.

Two Y-rails 13, 13 extending in the frontward and rearward directions are provided on the upper face of the X-moving plate 11. A main body 10 having a rectangular parallelepiped shape elongated in the right and left is provided on the Y-rails 13. The main body 10 includes two fitting grooves 10c, 10c in the lower face. Then, the Y-rails 13 are fit into the fitting grooves 10c in a slidable manner. In the front face of the main body 10, rectangular through holes 10b elongated up and down are provided in parallel to each other in the right and left directions. Then, from each through hole 10b, a lift plate 10a raising and lowering a moving panel described later protrudes in the frontward and rearward directions. The lift plates 10a are in parallel to the right and left and the frontward and rearward directions.

The transplanting mechanism 1 includes a control part (not illustrated). Then, in response to an instruction from the control part, the transplanting mechanism 1 travels on the Y-rails 12 and the Y-rails 13 and raises and lowers the lift plates 10a.

The front faces of the two transplanting mechanisms 1, 1 are opposite to each other. Then, one culture medium board 200 cultivating plants is provided in a space between the transplanting mechanisms 1 located opposite to each other. Further, another culture medium board 200 is provided adjacent to the culture medium board 200. The two culture medium boards 200, 200 are aligned in the right and left directions and the two culture medium boards 200, 200 are designed in the same dimensions. The culture medium board 200 includes a rectangular containing tray 20 containing plants. A locking groove 20a is formed in the entire circumference of the upper face inner side of the edge portion of the containing tray 20. An edge portion of a rectangular holding panel 23 holding the plants is locked to the locking groove 20a. In the holding panel 23, a plurality of holding holes 23a, 23a, ..., 23a holding pots 25 described later are provided in parallel to each other. The holding holes 23a are arranged in a grid form in plan view.

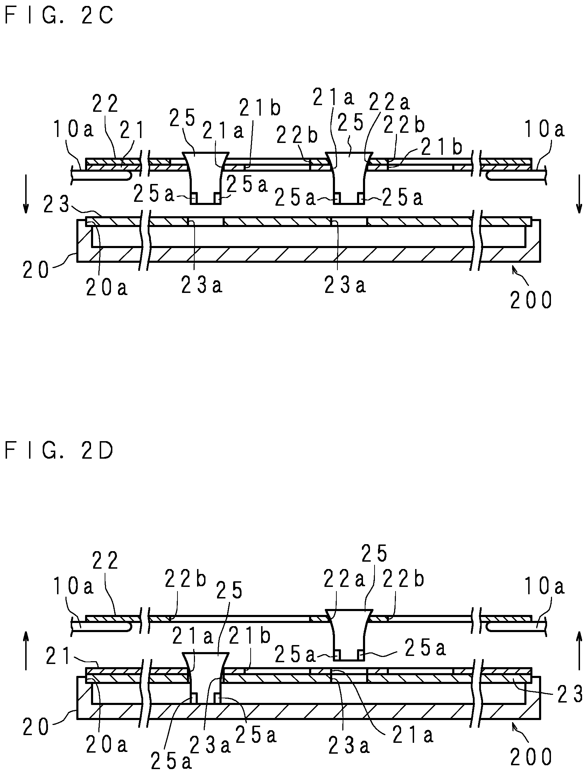

A rectangular first transfer panel 21 is placed on the holding panel 23. Then, in the first transfer panel 21, a plurality of small-diameter holes 21a and large-diameter holes 21b are alternately opened at positions corresponding to the holding holes 23a. As illustrated in FIG. 2, the small-diameter hole group 21a, 21a, ..., 21a and the large-diameter hole group 21b, 21b, ..., 21b are respectively arranged in a zigzag form in plan view.

A second transfer panel 22 is placed on the first transfer panel 21. Then, in the second transfer panel 22, a plurality of small-diameter holes 22a and large-diameter holes 22b are alternately opened at positions corresponding to the small-diameter holes 21a of the first transfer panel. The small-diameter hole group 22a, 22a, ..., 22a and the large-diameter hole group 22b, 22b, ..., 22b are arranged in a grid form.

As illustrated in FIG. 2, the small-diameter holes 21a and 22a of the first transfer panel 21 and the second transfer panel 22 have approximately the same diameters. The large-diameter hole 22b of the second transfer panel 22 has a diameter longer than the total diameter of the small-diameter hole 21a and the large-diameter hole 21b of the first transfer panel 21. The small-diameter hole 21a and the large-diameter hole 21b of the first transfer panel 21 are located in the inner side of the large-diameter hole 22b of the second transfer panel 22. Then, the small-diameter hole 22a of the second transfer panel 22 adjacent to the large-diameter hole 21b is arranged coaxially to the small-diameter hole 21a of the first transfer panel 21.

Pots 25 supporting plants are inserted into the small-diameter holes 21a , 22a, the large-diameter holes 21b , 22b, and the holding holes 23a. The pot 25 has the shape of a truncated cone whose both faces in the up and down are opened. Then, the side surface thereof is curved such that the upper side expands and spreads. A plurality of water flowing holes 25a, 25a, ..., 25a are opened in the lower end part of the pot 25. A culture medium composed of foamed polyurethane or the like and having an excellent water absorptivity is provided in the inside of the pot 25. Water containing a chemical liquid is present in the containing tray 20 and then the culture medium absorbs the water having entered through the water flowing holes 25a. Seeding is performed on the culture medium and the plant grows upward from the culture medium.

As illustrated in FIG. 2A, the pots 25 are inserted respectively into the small-diameter hole 21a and the large-diameter hole 21b of the first transfer panel 21 located in the inner side of the large-diameter hole 22b of the second transfer panel 22. The diameter of the small-diameter hole 21a is smaller than the maximum diameter of the pot 25. Thus, the pot 25 inserted into the small-diameter hole 21a is locked to the small-diameter hole 21a. The diameter of the large-diameter hole 21b of the first transfer panel 21 is greater than the maximum diameter of the pot 25. Thus, the pot 25 inserted into the large-diameter hole 21b is not locked to the large-diameter hole 21b. Further, the large-diameter hole 22b of the second transfer panel 22 has a diameter greater than twice the maximum diameter of the pot 25. Thus, the pot 25 is not locked to the large-diameter hole 22b.

The pot 25 is inserted into the small-diameter hole 22a of the second transfer panel 22. The diameter of the small-diameter hole 22a is smaller than the maximum diameter of the pot 25. Thus, the pot 25 inserted into the small-diameter hole 22a is locked to the small-diameter hole 22a. Further, the pot 25 is inserted also into the small-diameter hole 21a of the first transfer panel 21 and hence locked also to the small-diameter hole 21a.

Here, the first and the second transfer panel 21,22 are arranged on the holding panel 23 of one culture medium board 200. However, both transfer panels 21, 22 are not arranged on the other culture medium board 200.

The transplanting mechanism 1 performs transplanting as follows. As illustrated in FIG. 2A, the transplanting mechanism 1 slides on the Y-rails 13 so as to approach the one transplanting mechanism 1 and then inserts the lift plates 10a between the first transfer panel 21,22 and the holding panel 23. As illustrated in FIG. 2B, the transplanting mechanism 1 raises the lift plates 10a so as to lift the first and the second transfer panel 22 upward. At that time, the plurality of pots 25 locked to the small-diameter holes 21a of the first transfer panel 21 and arranged in a zigzag form are raised together with both transfer panels 21 , 22.

The transplanting mechanisms 1 , 1 slide on the Y-rails 12 so as to move respectively to both the frontward and rearward sides of the other culture medium board 200 and thereby matches the positions of the holding holes 23a of the culture medium board 200 with the positions of the pots 25. As illustrated in FIG. 2C, the transplanting mechanism 1 lowers the lift plates 10a so as to insert the pots 25 into the holding holes 23a of the through culture medium board 200. The transplanting mechanism 1 slides on the Y-rails 13 so as to depart from the culture medium board 200. At that time, in the two culture medium boards 200, 200, the pots 25 are arranged in a zigzag form. Further, the number of pots 25 arranged on the single culture medium board 200 has been reduced into half. Thus, the pot 25 interval increases in comparison with that prior to the transplanting.

When the next transplanting is to be performed, the transplanting mechanism 1 slides on the Y-rails 13 so as to approach the culture medium board 200 and then inserts the lift plates 10a between the first and the second transfer panel 21,22. As illustrated
in FIG. 2D, the transplanting mechanism 1 raises the lift plates 10a so as to lift the second transfer panel 22 upward. At that time, the plurality of pots 25 locked to the small-diameter holes 22a of the second transfer panel 22 and arranged in a grid form are raised. Then, the second transfer panel 22 is moved to the adjacent next culture medium board 200 so that the pots 25 are arranged in a grid form. At that time, the number of pots 25 arranged on the single culture medium board 200 is reduced into half. Thus, the pot 25 interval increases in comparison with that prior to the transplanting.

Here, three or more transfer panels may be stacked. Also in this case, as described above, the transplanting mechanism 1 transfers the transfer panels successively so that the number of pots 25 is allowed to be reduced into half and hence the pot 25 interval is allowed to be increased.

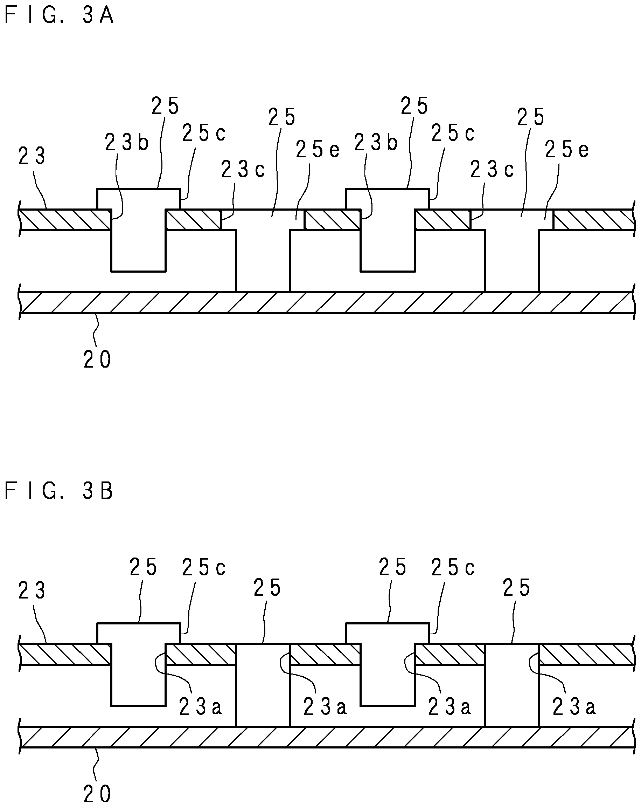

Here, the holding panel 23 may be transferred so that the number of pots 25 may similarly be reduced into half. FIGS. 3A and 3B are schematic diagrams illustrating the holding panel 23 to be transferred.

As illustrated in FIG. 3A, in the holding panel 23, the small-diameter holes 23b and the large-diameter holes 23c are formed alternately. The pot 25 has a cylindrical shape having a flange 25c in the upper end part. The diameter of the small-diameter hole 23b is smaller than the flange 25c and the diameter of the large-diameter hole 23c is larger than the flange 25c. Thus, the pots 25 are locked to the small-diameter holes 23b and not locked to the large-diameter holes 23c. When the holding panel 23 is raised and moved, only the pots 25 locked to the small-diameter holes 23b are moved so that the number of pots 25 posterior to the transplanting is allowed to be reduced into half.

Further, the holding panel 23 and the pots 25 may be constructed as follows. As illustrated in FIG. 3B, a plurality of holding holes 23a of the same diameter are provided in the holding panel 23. Pots 25 having the flange 25c described above and pots 25 having a cylindrical shape without the flange 25c are prepared. The diameter of the pot 25 not having the flange 25c is smaller than the holding hole 23a. Also in the pot 25 having the flange 25c, the diameter of the portion other than the flange 25c is smaller than the holding hole 23a.

The individual pots 25 are alternately inserted into the holding holes 23a. At that time, the pots 25 having the flange 25c are locked to the locking holes and the pots 25 not having the flange 25c are not locked to the holding holes 23a. When the holding panel 23 is raised and moved, only the pots 25 locked to the small-diameter holes 23b are moved so that the number of pots 25 posterior to the transplanting is allowed to be reduced into half.

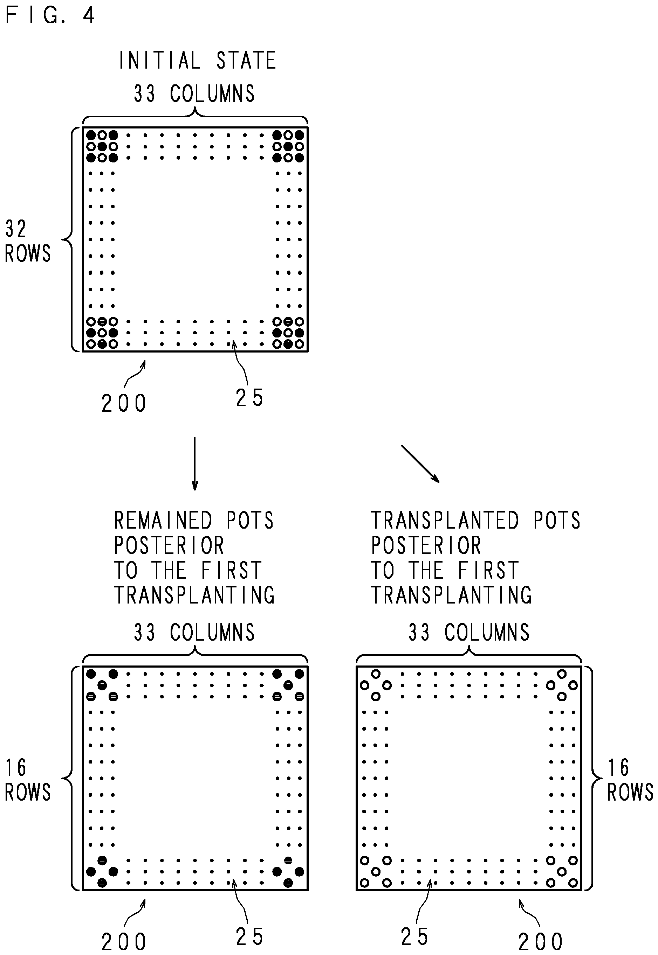

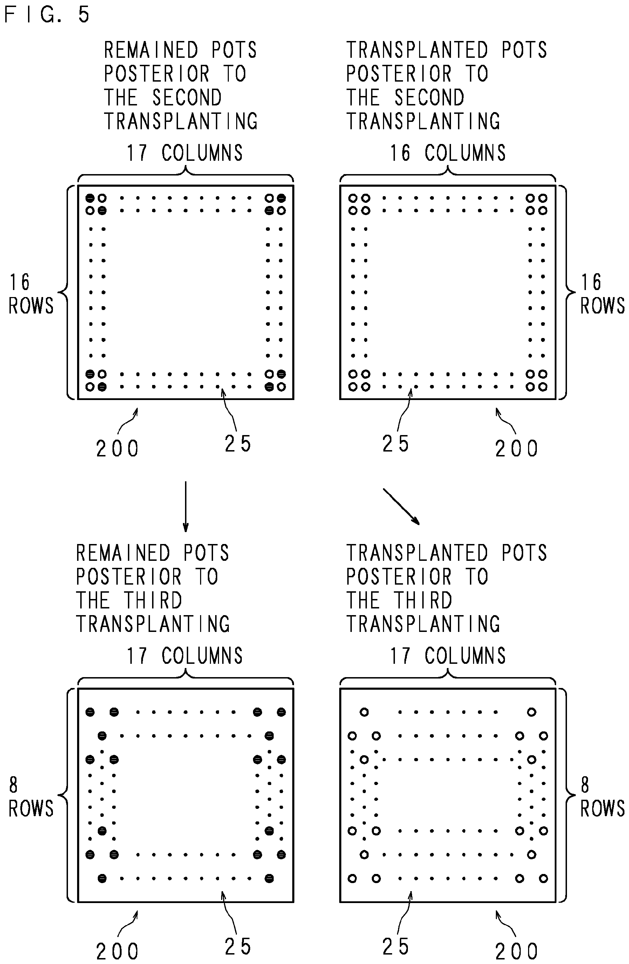

Next, a change in the interval between the pots 25 in association with the transplanting is described below. FIGS. 4 and 5 are explanation diagrams describing a change in the interval between the pots 25 in association with the transplanting.

The following description is given with adopting an initial state that in the culture medium board 200, the pots 25 are aligned in 33 columns by 32 rows (see a diagram illustrating the initial state in FIG. 4). In the initial state, the pots 25 are arranged in a grid form. From this state, half the pots 25 are transplanted into a zigzag form. For example, in the diagram illustrating the initial state, the pots 25 illustrated in white are to be transplanted and the pots 25 illustrated in dark color are to be remained. In the flowing description, the pots having been remained and the pots having been transplanted posterior to the transplanting are referred to as remained pots and transplanted pots, respectively.

As illustrated in the diagram illustrating the remained pots posterior to the first transplanting in FIG. 4, the remained pots 25 are arranged in a zigzag form of 33 columns by 16 rows. Further, as illustrated in the diagram illustrating the transplanted pots posterior to the first transplanting in FIG. 4, the transplanted pots 25 also are arranged in a zigzag form of 33 columns by 16 rows. As a result of this transplanting, the density of pots 25 is reduced into half. Thus, the distance between the pots 25 is easily allowed to be increased between the culture medium boards 200 of the same dimension.

Then, from the pots 25 of 33 columns by 16 rows, 16 columns of the pots 25 arranged at even-number-th columns counted from the left end column are transplanted and 17 columns of the pots 25 arranged at odd-number-th columns are remained. As illustrated in the diagram illustrating the remained pots posterior to the second transplanting in FIG. 5, the remained pots 25 are arranged in a grid form of 17 columns by 16 rows. Further, as illustrated in the diagram illustrating the transplanted pots posterior to the second transplanting in FIG. 5, the transplanted pots 25 also are arranged in a grid form of 16 columns by 16 rows. As a result of this transplanting, the density of pots 25 is reduced into approximately half. Thus, the distance between the pots 25 is easily allowed to be increased between the culture medium boards 200 of the same dimension.

Then, from the pots 25 of 17 columns by 16 rows, half the pots 25 are transplanted in a zigzag form. For example, in the diagram illustrating the remained pots posterior to the second transplanting in FIG. 5, the pots 25 illustrated in white are transplanted and the pots 25 illustrated in dark color are remained. As illustrated in the diagram illustrating the remained pots posterior to the third transplanting in FIG. 5, the remained pots 25 are arranged in a zigzag form of 17 columns by 8 rows. Further, as illustrated in the diagram illustrating the transplanted pots posterior to the third transplanting in FIG. 5, the transplanted pots 25 also are arranged in a zigzag form of 17 columns by 8 rows. As a result of this transplanting, the density of pots 25 is reduced into half. Similarly, the density of pots 25 is reduced into approximately half in each of the following processing. Here, also in the pots 25 of a grid form of 16 columns by 16 rows illustrated in the diagram illustrating the transplanted pot posterior to the second transplanting in FIG. 5, the density is reduced successively by half like into 8 columns by 8 rows and into 4 columns by 4 rows.

In the transplanting device according to Embodiment 1, when transplanting is to be performed between the culture medium boards 200, the step of arranging into a zigzag form the plants having been arranged in a grid form and the step of arranging into a grid form the plants having been arranged in a zigzag form are repeated so that, at each time that such one step is performed, the number of plants arranged on the culture medium board is reduced into half.

Further, the processing is started from the step of arranging into a zigzag form the plants having been arranged in a grid form. Thus, a larger number of seeds are allowed to be arranged on the culture medium board in comparison with a case that arrangement in a zigzag form is adopted at the time of seeding.

Further, when the first transfer panel 21 and the second transfer panel 22 provided in the transplanting source are moved, only plants locked in the locking holes are transplanted to the culture medium board of transplanting destination and plants arranged in the non-locking holes remain in the transplanting source. Thus, a large number of times of transplanting are allowed to be realized simply and rapidly at one step. Here, in the embodiment described above, the first transfer panel 21, the second transfer panel 22, or the holding panel 23 is transferred by the transplanting mechanism 1. Instead, the transfer may be performed by manual operation. Further, a configuration may be employed that bifurcated hands 166 approach to or depart from each other. In this case, when approaching or departing, the hands 166 are allowed to reliably pinch or detach the pot 25.

### (Embodiment 2)

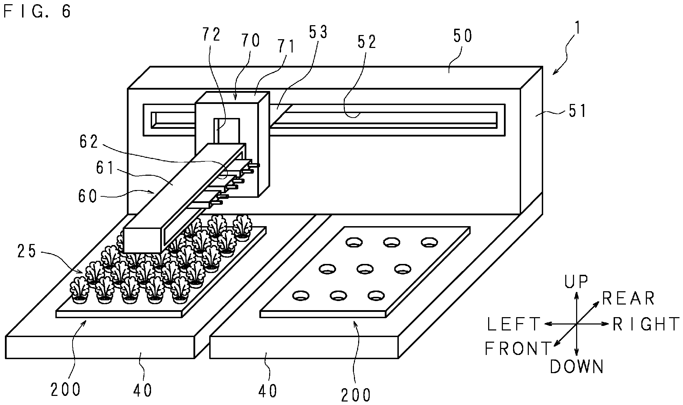

Detailed description is given below with reference to the drawings illustrating a transplanting device according to Embodiment 2 of the present invention. FIG. 6 is a schematic diagram illustrating the transplanting device.

The transplanting device includes a transplanting mechanism 1. The transplanting mechanism 1 is provided on two tables 40 , 40 on which culture medium boards 200 are placed. The transplanting mechanism 1 includes: an X-movement mechanism 50 moving later-mentioned hands 166 in the right and left directions; a Y-movement mechanism 60 moving the hands 166 in the frontward and rearward directions; and a Z-movement mechanism 70 moving the hands 166 in the up and down directions.

The X-movement mechanism 50 stands at the rear end parts of the two tables 40, 40 and bridges them. The X-movement mechanism 50 includes: a housing 51 having a rectangular parallelepiped shape elongated in the right and left directions; and an opening part 52 provided in the front face of the housing 51 and extending in the right and left directions. A ball screw mechanism (not illustrated) is contained in the inside of the housing 51. Then, a nut part 53 of the ball screw mechanism protrudes from the opening part 52. The protruding nut part 53 is provided with the Z-movement mechanism 70 moving the hands 166 in the up and down directions.

The Z-movement mechanism 70 includes: a housing 71 having a rectangular parallelepiped shape elongated in the up and down directions; and an opening part 72 provided in the front face of the housing 71 and extending in the up and down directions. A ball screw mechanism (not illustrated) is contained in the inside of the housing 71. Then, a nut part of the ball screw mechanism protrudes from the opening part 72. The protruding nut part is provided with the Y-movement mechanism 60 moving the hands 166 in the frontward and rearward directions.

The Y-movement mechanism 60 includes: a housing 61 having a rectangular parallelepiped shape elongated in the frontward and rearward directions; and an opening part 62 provided in a side face of the housing 61 and extending in the frontward and rearward directions. A plurality of hands 166 bifurcated on one end side protrude from the opening part 62.

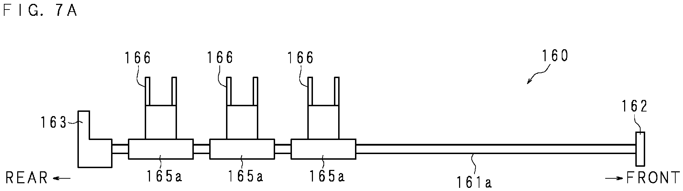

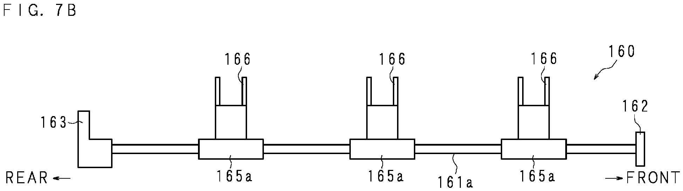

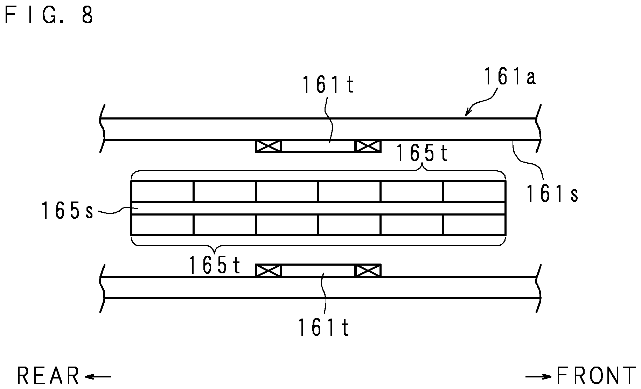

FIGS. 7A and 7B are plan views schematically illustrating a hand mechanism 160 contained in the housing 61 of the Y-movement mechanism 60. FIG. 8 is a schematic diagram illustrating a linear motor part of the hand mechanism 160. The hand mechanism 160 is contained in the housing 61 of the Y-movement mechanism 60. The hand mechanism 160 includes a linear rail 161a extending in the frontward and rearward directions. Both end parts of the linear rail 161a are supported by two support plates 162 and 163. The support plates 162 and 163 are respectively fixed to the front part and the rear part of the housing 61. In the linear rail 161a, a plurality of linear movable elements 165a , 165a, ..., 165a are aligned in a slidable manner.

As illustrated in FIG. 8, the linear rail 161a is provided with a groove 161s extending in the frontward and rearward directions. On each of both side surfaces of the groove 161s, a plurality of magnet coils 161t are aligned in the frontward and rearward directions. The linear movable element 165a includes a holding plate 165s inserted into the groove 161s. Both faces of the holding plate 165s are opposite to both side surfaces of the groove 161s. On each of both faces of the holding plate 165s, a plurality of permanent magnets 165t, 165t, ..., 165t are aligned along the frontward and rearward directions.

When an electric current is supplied to the magnet coils 161t, a thrust force in the frontward and rearward directions occurs in the linear movable element 165a. In other words, the linear rail 161a and the linear movable element 165a serves as a linear motor. When the electric current supplied to each magnet coil 161t is controlled, each linear movable element 165a is allowed to be moved individually. Thus, the interval between the hands 166 provided in the linear movable element 165a is allowed to be set up arbitrarily.

Here, a configuration may be employed that the linear movable element 165a includes a magnet coil and the linear rail 161a includes permanent magnets. In this case, when the electric current supplied to the magnet coil of the linear movable element 165a is controlled, each linear movable element 165a is allowed to be moved individually.

The linear motor constructed from the linear rail 161a and the linear movable element 165a is merely exemplary. That is, the hands 166 may be moved by employing another linear motor.

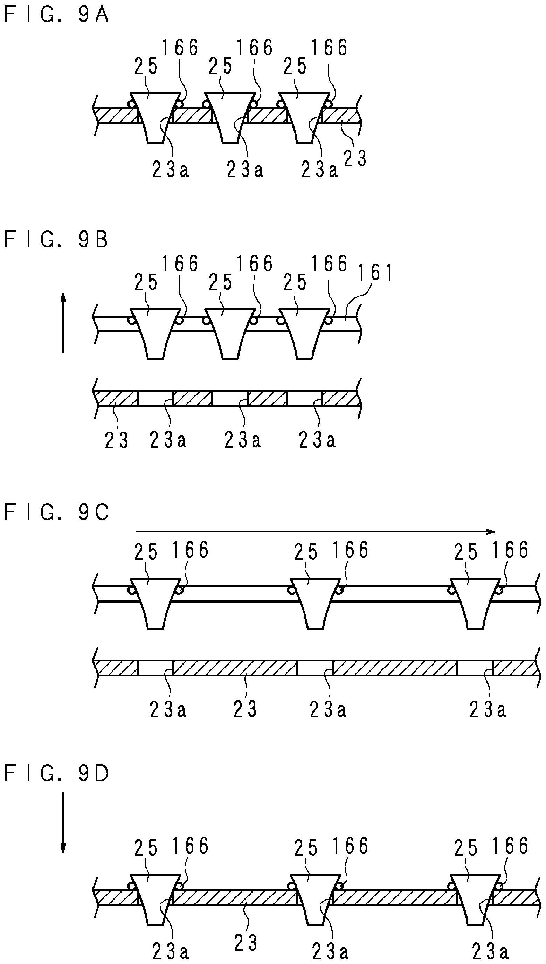

Next, operation of the transplanting mechanism 1 is described below. FIGS. 9A to 9D are explanation diagrams describing operation of the transplanting mechanism 1. The transplanting mechanism 1 includes a control part (not illustrated) and then, in accordance with an instruction from the control part, moves the hands 166. The transplanting mechanism 1 drives the X-movement mechanism 50 so as to move the hands 166 to the outer side of the column located at the edge among the columns of the pots 25 aligned in line on the culture medium board 200. At that time, the hand 166 interval is consistent with the pot 25 interval and hence the hands 166 are located at positions adjacent to the pots 25 in plan view.

Then, the transplanting mechanism 1 drives the Z-movement mechanism 70 so as to lower the hands 166. At that time, the hand 166 becomes opposite to the center portion of the pot 25 in the frontward and rearward directions. Here, the hand 166 interval is longer than the center part diameter of the pot 25 and shorter than the upper end part diameter of the pot 25. Then, as illustrated in FIG. 9A, the transplanting mechanism 1 drives the Z-movement mechanism 70 so as to approach the hands 166 to the pot 25 and thereby holds the pot 25 located in the inner side of the hands 166.

Then, as illustrated in FIG. 9B, the transplanting mechanism 1 drives the Z-movement mechanism 70 so as to raise the hands 166 and thereby extracts the pots 25 from the holding holes 23a. Then, as illustrated in FIG. 9C, the transplanting mechanism 1 drives the Y-movement mechanism 60 (the hand mechanism 160) so as to move the hands 166 and thereby increases the hand 166 interval in correspondence to the holding holes 23a of transplanting destination. Then, the X-movement mechanism 50 drives the transplanting mechanism 1 so as to move the hands 166 over the column of the holding holes 23a of transplanting destination. Here, this column of the holding holes 23a is a column located in the center portion of the culture medium board 200 of transplanting destination.

Then, as illustrated in FIG. 9D, the Z-movement mechanism 70 drives the transplanting mechanism 1 so as to lower the hands 166 and thereby inserts the pots 25 into the holding holes 23a. In the culture medium board 200 of transplanting destination, the pot 25 interval becomes longer than the interval in the transplanting source. Here, a configuration may be employed that the transplanting mechanism 1 is arranged on each of the frontward and rearward sides of the culture medium board 200 so that transplanting work may be executed from both sides.

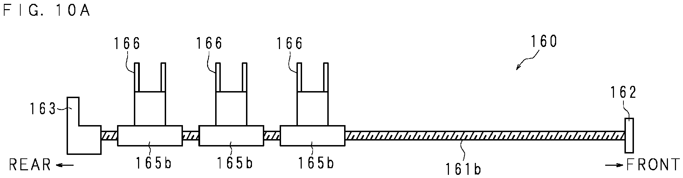

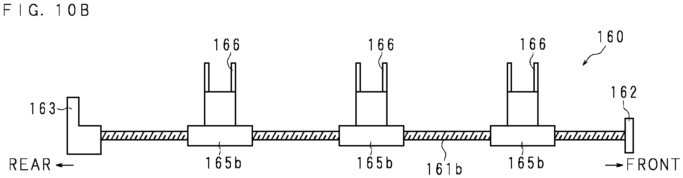

The hand mechanism 160 may be constructed as follows. FIGS. 10A and 10B are plan views schematically illustrating another Implementation Example 1 of the hand mechanism 160. The hand mechanism 160 includes: a male screw 161b in place of the linear rail 161a; and a plurality of hollow motors 165b, 165b, ..., 165b in place of the linear movable elements 165a.

The hollow motor 165b includes a female screw portion in the inside. Then, the female screw portion engages with the male screw 161b. The female screw portion of the hollow motor 165b revolves about a shaft of the male screw 161b so that the hollow motor 165b moves in the axial length directions. The plurality of hollow motors 165b, 165b, ..., 165b are allowed to be moved individually. Thus, the interval between the hands 166 provided in the hollow motors 165b is allowed to be set up arbitrarily.

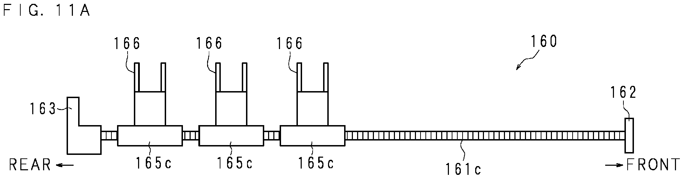

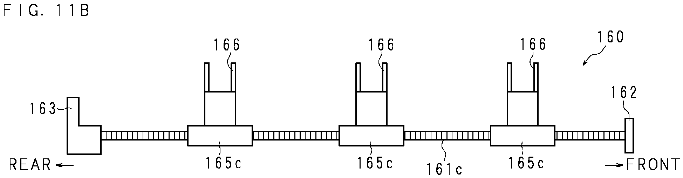

FIGS. 11A and 11B are plan views schematically illustrating another Implementation Example 2 of the hand mechanism 160. The hand mechanism 160 includes: a rack 161c in place of the linear rail 161a; and a plurality of transportation parts 165c, 165c, ..., 165c conveying the hands 166 in place of the linear movable elements 165a. The transportation part 165c includes: a pinion (not illustrated) engage with the rack 161c; and a motor (not illustrated) driving the pinion.

The pinion is revolved in association with the drive of the motor so that the transportation part 165c is moved on the rack 161c. The plurality of transportation parts 165c, 165c, ..., 165c are allowed to be moved individually. Thus, the interval between the hands 166 provided in the transportation part 165c is allowed to be set up arbitrarily.

When a grid form arrangement and a zigzag form arrangement are to be repeated alternately between the culture medium board 200 of transplanting source and the culture medium board 200 of transplanting destination, in many cases, the interval between holding holes 23a formed in the culture medium board 200 is different in the transplanting source and in the transplanting destination. Thus, the interval between the hands 166 need be changed at each time of transplanting.

As described above, when the linear movable element 165a, the hollow motor 165b, or the transportation part 165c is employed, the interval between the hands 166 is allowed to be set up arbitrarily. Thus, even when the interval between the holding holes 23a is different between the culture medium boards 200 of the transplanting source and of the transplanting destination, flexible processing is allowed.

Further, in association with growth of the plants, transplanting work is to be performed in a plurality of times. Then, since the interval between the hands 166 is allowed to be set up arbitrarily, the same hand mechanism 160 is allowed to be used in each occasion of the transplanting work.

Further, the pots 25 are arranged in a limited region of the culture medium board 200. Thus, in some cases, the interval of the holding holes 23a is different depending on the portion of the culture medium board 200 like a case that the interval of the holding holes 23a is reduced only in an edge portion of the culture medium board 200. Even in such a case, the intervals between the hands 166 are allowed to be set up in accordance with the intervals of the holding holes 23a in each portion of the culture medium board 200. This improves the flexibility in the arrangement of the holding holes 23a in the culture medium board 200.

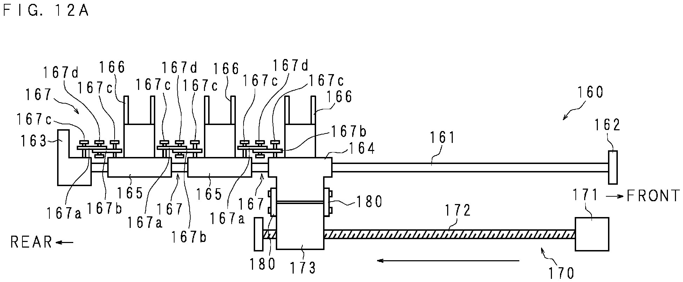

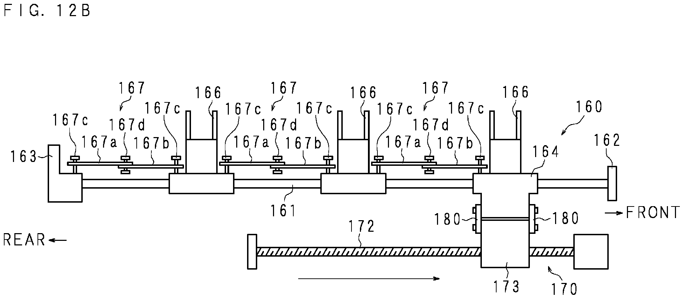

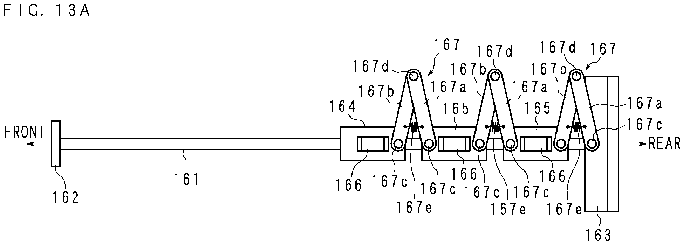

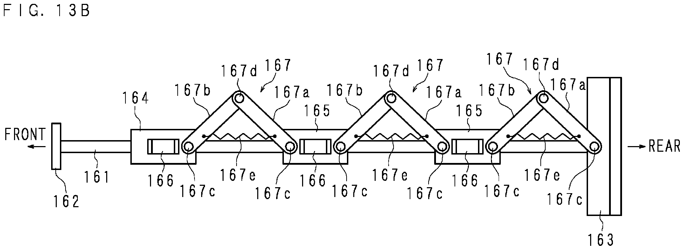

Further, the hand mechanism 160 may be constructed as follows. FIGS. 12A and 12B are plan views schematically illustrating another Implementation Example 3 of the hand mechanism 160. FIGS. 13A and 13B are side views schematically illustrating another Implementation Example 3 of the hand mechanism 160.

The hand mechanism 160 includes a ball screw mechanism 170 extending in the frontward and rearward directions. The ball screw mechanism 170 includes: a motor 171; a male screw 172 linked to an output shaft of the motor 171; and a nut part 173 engaged with the male screw 172 with a rolling element in between. In association with revolution of the motor 171, the nut part 173 is moved in the frontward and rearward directions.

A guide rail 161 extending in the frontward and rearward directions is contained in the housing 61. Both end parts of the guide rail 161 are supported by two support plates 162 and 163. The support plates 162 and 163 are respectively fixed to the front part and the rear part of the housing 61. The guide rail 161 and the ball screw mechanism 170 are aligned in the right and left directions. On the guide rail 161, a connection slide member 164 linked to the nut part 173 and a plurality of slide members 165 located between the connection slide member 164 and the support plate 163 are aligned in a slidable manner.

Bifurcated hands 166 are provided respectively in the connection slide member 164 and the slide members 165. The distance between the bifurcated portions is smaller than the diameter of the upper end part of the pot 25 described later (the maximum diameter) and greater than the diameter of the lower end part (the minimum diameter).

The support plate 163 located on the rear side (on the Z-movement mechanism 70 side), the connection slide members 164, and the slide members 165,165 are linked by linkage mechanisms 167, 167, 167. The linkage mechanism 167 linking the support plate 163 and the connection slide member 164 includes: two support pins 167c provided in the support plate 163 and the connection slide member 164; two links 167a and 167b that one end part of each is linked to each support pin 167c in a rotatable manner; and a connecting pin 167d linking both of the other end parts of the two links 167a and 167b in a rotatable manner. The two links 167a and 167b are linked by a spring 167e. An elastic restoring force of the spring 167e causes a force on the links 167a and 167b in a direction of approaching to each other.

Further, the linkage mechanism 167 linking between the slide members 165 , 165 and between the connection slide member 164 and the slide member 165 includes: two support pins 167c provided in parts adjacent to each other in the connection slide member 164 or the slide member 165; two links 167a and 167b that one end part of each is linked to each support pin 167c in a rotatable manner; and a connecting pin 167d linking both of the other end parts of the two links 167a and 167b in a rotatable manner. The two links 167a and 167b are linked by a spring 167e. An elastic restoring force of the spring 167e causes a force on the links 167a and 167b in a direction of approaching to each other.

The connection slide member 164 and the nut part 173 are linked through linking members 180, 180. The linkage mechanism 167 is expanded and contracted in association with movement of the slide member 164 linked to the nut part 173. All linkage mechanisms 167 are designed in the same dimensions and all springs 167e have the same spring coefficient.

In association with rotation of the motor 171, the nut part 173 travels on the male screw 172 shaft in the axial length directions so that a grip member linked to the nut part 173 travels on the guide rail 161 in the same direction as the nut part 173. Further, other grip members are also linked by the linkage mechanisms 167 and hence follow and travel together with the nut part 173.

As illustrated in FIGS. 12A and 13A, when the nut part 173 becomes distant from the motor 171, the distance between the hands 166 and the distance between the hand 166 and the support plate 163 become short. On the other hand, as illustrated in FIGS. 12B and 13B, when the nut part 173 approaches the motor 171, the distance between the hands 166 and the distance between the hand 166 and the support plate 163 become long. Here, since the linkage mechanisms 167 have the same spring 167e coefficient, the distance between the hands 166 and the distance between the hand 166 and the support plate 163 become the same regardless of the position of the nut part 173.

The linkage mechanism 167 sets forth the interval between the hands 166. Thus, the distance between the plants held by the individual hands 166 becomes equal to the arrangement interval in the transplanting destination easily and rapidly.

The hands 166 have been moved by employing the ball screw mechanism 170. Instead, the slide member 164 may be linked to a piston traveling in the inside of a cylinder so that the hands 166 may be moved.

The transplanting by the transplanting mechanism 1 is achieved such that a column located at the edge among the columns of the pots 25 of transplanting source is successively extracted and then successively inserted into a column located on the most center side among the columns of holding hole 23a that do not holding the pots 25 in transplanting destination. For example, following description is given for a case that transplanting is to be performed from the culture medium board 200 having pot 25 columns of 6 rows by 6 columns to the culture medium board 200 having the holding holes 23a of 3 rows by 4 columns and not holding the pots 25. Here, it is premised that the transplanting mechanism 1 is provided on each side of the culture medium board 200.

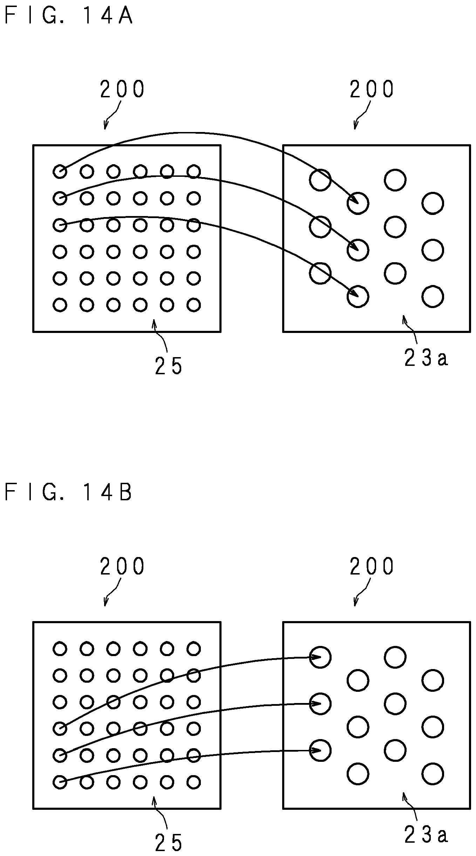

FIGS. 14A to 14D are explanation diagrams describing a transplanting procedure. As illustrated in FIG. 14A, the transplanting mechanism 1 located on one side (on the left side in FIGS. 14A to 14D) extracts the pots 25 in the first to the third rows of the first column among the pot 25 columns of transplanting source and then transplants them into the holding holes 23a in the second column among the holding hole 23a columns of transplanting destination. Then, as illustrated in FIG. 14B, the transplanting mechanism 1 located on one side extracts the pots 25 in the fourth to the sixth rows of the first column among the pot 25 columns of transplanting source and then transplants them into the holding holes 23a in the first column among the holding hole 23a columns of transplanting destination.

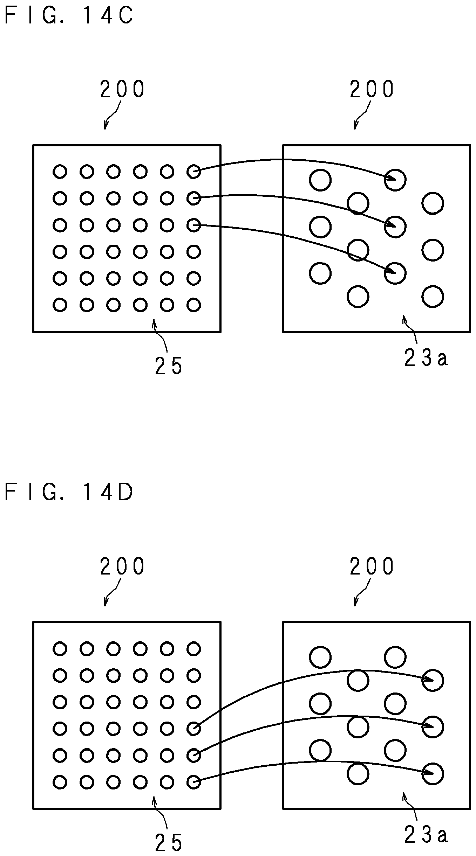

Then, as illustrated in FIG. 14C, the transplanting mechanism 1 located on the other side (on the right side in FIGS. 14A to 14D) extracts the pots 25 in the first to the third rows of the sixth column among the pot 25 columns of transplanting source and then transplants them into the holding holes 23a in the third column among the holding hole 23a columns of transplanting destination. Then, as illustrated in FIG. 14D, the transplanting mechanism 1 located on the other side extracts the pots 25 in the fourth to the sixth rows of the sixth column among the pot 25 columns of transplanting source and then transplants them into the holding holes 23a in the fourth column among the holding hole 23a columns of transplanting destination.

Then, the culture medium board 200 of transplanting destination is replaced by the culture medium board 200 into which the pots 25 are not inserted and then the pots 25 in the second column and the fifth column of transplanting source are transplanted similarly. Then, such processing is repeated.

As such, the pots 25 are extracted successively from an edge portion side in the culture medium board 200 of transplanting source and then transplanting of the extracted pots 25 is started from the center portion in the culture medium board 200 of transplanting destination. Then, the pots 25 are successively transplanted to an edge portion side. This avoids a situation that the hands 166 go into unnecessary contact with the plants in the transplanting source and the transplanting destination during the transplanting work. Thus, occurrence of damage to the plants is allowed to be avoided.

In the transplanting device according to Embodiment 2, each plant is held and extracted individually from the culture medium board 200 of transplanting source and then transplanting is allowed to be performed in a manner that the distance between the plants is adjusted to the arrangement interval in the transplanting destination.

Further, extraction of the plants is started from an edge portion in the culture medium board 200 of transplanting source and then transplanting is started from the center portion in the culture medium board 200 of transplanting destination. Thus, damage to the plant is allowed to be avoided.

In the configuration of Embodiment 2, like components to Embodiment 1 are designated by like numerals and hence not described.

The embodiments disclosed here are to be recognized as illustrative and non-restrictive at all points. It is intended that the scope of the present invention encompasses all modifications within the scope of the annexed claims.

### DESCRIPTION OF REFERENCE NUMERALS

- 1: transplanting mechanism
- 21: first transfer panel (Panel)
- 22: second transfer panel (Panel)
- 23: holding panel (Panel)
- 21a, 22a, 23b: small-diameter hole (locking hole)
- 21b, 22b, 23c: large-diameter hole (non-locking hole)
- 25: pot (supporting member)
- 160: hand mechanism (holding means, driving means)
- 170: ball screw mechanism (driving means)
- 167: linkage mechanism
- 200: culture medium board

## Claims

1. A transplanting device performing transplanting between a plurality of culture medium boards (200) cultivating a plurality of plants planted in an aligned manner, comprising
a transplanting mechanism (1) transplanting the plants, wherein
the transplanting mechanism (1) performs alternately one step of arranging plants having been arranged in a grid form on a culture medium board (200) of transplanting source, into a zigzag form on a culture medium board (200) of transplanting destination and other step of arranging plants having been arranged in a zigzag form on a culture medium board (200) of transplanting source, into a grid form on a culture medium board (200) of transplanting destination.

2. The transplanting device according to claim 1, **characterized in that**
the one step is performed ahead of the other step.

3. The transplanting device according to claim 1 or 2, **characterized in that**
the culture medium board (200) includes
a panel (21,22,23) with locking holes (21a,22a,23b) and non-locking holes (21b,22b,23c) that are arranged in a grid form or a zigzag form and
wherein
the locking holes (21a,22a,23b) and the non-locking holes (21b,22b,23c) respectively locking and non-locking supporting members (25) supporting individual plants, and
the transplanting mechanism (1) includes
a lift lifting up the panel (21,22,23) so as to transfer the supporting members (25) locked in the locking holes (21a,22a,23b).

4. The transplanting device according to claim 1 or 2, **characterized in that**
the transplanting mechanism (1) includes:
a plurality of holding means (160) holding a supporting member supporting each plant; and
driving means (170) of moving each holding means (160), and wherein
the driving means (170) moves each holding means (160) in accordance with an arrangement interval of the plants in the culture medium board (200) of transplanting destination.

5. The transplanting device according to claim 4, **characterized in that**
the driving means (170) moves each holding means (160) individually.

6. The transplanting device according to claim 5, **characterized in that**
the driving means includes a linear motor.

7. The transplanting device according to claim 4, characterized of comprising a linkage mechanism (167) linking each holding means (160) such that an interval between the holding means (160) becomes equal to the arrangement interval.

8. The transplanting device according to any one of claims 4 to 7, **characterized in that**
the transplanting mechanism (1) extracts a plant from an edge portion side of the culture medium board (200) of transplanting source, then starts transplanting from a center portion of the culture medium board (200) of transplanting destination, and then performs the transplanting successively toward an edge portion side.

9. A transplanting method performed between a plurality of culture medium boards (200) cultivating a plurality of plants provided in an aligned manner, comprising:
one step of arranging plants having been arranged in a grid form on a culture medium board (200) of transplanting source, into a zigzag form on a culture medium board (200) of transplanting destination; and
other step of arranging plants having been arranged in a zigzag form on a culture medium board (200) of transplanting source, into a grid form on a culture medium board (200) of transplanting destination, wherein
both steps described above are performed alternately.

10. The transplanting method according to claim 9, **characterized in that**
the one step is performed ahead of the other step.

11. The transplanting method according to claim 9 or 10, **characterized in that**
the culture medium board (200) of transplanting source comprises a panel with locking holes (21a,22a,23b) and non-locking holes (21b,22b,23c) that are arranged in a grid form or a zigzag form and the locking holes (21a,22a,23b) and the non-locking holes (21b,22b,23c) respectively lock and non-lock supporting members that support each plant and
the transplanting method further comprises steps of lifting up the panel (21,22,23); and
transporting the supporting members (25) that are supported by the locking holes (21a,22a,23b).

12. A transplanting device performing transplanting between a plurality of culture medium boards (200) cultivating a plurality of plants provided in an aligned manner, comprising
a transplanting mechanism (1) extracting a plant from an edge portion side of the culture medium board (200) of transplanting source, then starting transplanting from a center portion of the culture medium board (200) of transplanting destination, and then performing the transplanting successively toward an edge portion side.

13. A transplanting method performed between culture medium boards (200) cultivating a plurality of plants provided in an aligned manner, comprising
a step of extracting a plant from an edge portion side of the culture medium board (200) of transplanting source, then starting transplanting from a center portion of the culture medium board (200) of transplanting destination, and then performing the transplanting successively toward an edge portion side.

## Patentansprüche

1. Transplantationsvorrichtung zum Durchführen von Transplantationen zwischen mehreren Kulturmediumplatten (200), auf welchen mehrere ausgerichtet gepflanzte Pflanzen kultiviert werden, mit:
einem Transplantationsmechanismus (1), der die Pflanzen transplantiert, wobei
der Transplantationsmechanismus (1) abwechselnd einen Schritt des Anordnens von Pflanzen, die auf einer Kulturmediumplatte (200) einer Transplantationsquelle in Gitterform angeordnet wurden, in einer Zickzackform auf einer Kulturmediumplatte (200) eines Transplantationsziels, und einen anderen Schritt des Anordnens von Pflanzen, die auf einer Kulturmediumplatte (200) einer Transplantationsquelle in Zickzackform angeordnet wurden, in einer Gitterform auf einer Kulturmediumplatte (200) eines Transplantationsziels durchführt.

2. Transplantationsvorrichtung nach Anspruch 1, **dadurch gekennzeichnet, dass** der eine Schritt vor dem anderen Schritt durchgeführt wird.

3. Transplantationsvorrichtung nach Anspruch 1 oder 2, **dadurch gekennzeichnet, dass** die Kulturmediumplatte (200) aufweist:
eine Tafel (21, 22, 23) mit Verriegelungslöchern (21a, 22a, 23b) und Nicht-Verriegelungslöchern (21b, 22b, 23c), die in Gitterform oder in Zickzackform angeordnet sind, und
wobei die Verriegelungslöcher (21a, 22a, 23b) und die Nicht-Verriegelungslöcher (21b, 22b, 23c) Stützelemente (25), welche einzelne Pflanzen stützen, verriegeln bzw. nicht verriegeln, und
der Transplantationsmechanismus (1) aufweist:
eine Hubeinrichtung, welche die Tafel (21, 22, 23) anhebt, um die in den Verriegelungslöchern (21a, 22a, 23b) gehaltenen Stützelemente (25) zu transferieren.

4. Transplantationsvorrichtung nach Anspruch 1 oder 2, **dadurch gekennzeichnet, dass** der Transplantationsmechanismus (1) aufweist:
mehrere Halteeinrichtungen (160), die ein jeweils eine Pflanze stützendes Stützelement halten; und
eine Antriebseinrichtung (170) zum Bewegen der jeweiligen Halteeinrichtungen (160) entsprechend einem Anordnungsintervall der Pflanzen in der Kulturmediumplatte (200) des Transplantationsziels.

5. Transplantationsvorrichtung nach Anspruch 4, **dadurch gekennzeichnet, dass** die Antriebseinrichtung (170) jede Halteeinrichtung (160) einzeln bewegt.

6. Transplantationsvorrichtung nach Anspruch 5, **dadurch gekennzeichnet, dass** die Antriebseinrichtung einen Linearmotor aufweist.

7. Transplantationsvorrichtung nach Anspruch 4, **dadurch gekennzeichnet, dass** sie einen Verbindungsmechanismus (167) aufweist, der jede Halteeinrichtung (160) derart verbindet, dass ein Intervall zwischen den Halteeinrichtungen (160) gleich dem Anordnungsintervall ist.

8. Transplantationsvorrichtung nach einem der Ansprüche 4 bis 7, **dadurch gekennzeichnet, dass** der Transplantationsmechanismus (1) eine Pflanze aus einer Randbereichsseite der Kulturmediumplatte (200) der Transplantationsquelle zieht, sodann beginnt, von einer Mittelposition der Kulturmediumplatte (200) des Transplantationsziels zu transplantieren, und anschließend nacheinander in Richtung der Randbereichsseite transplantiert.

9. Transplantationsverfahren zur Durchführung zwischen mehreren Kulturmediumplatten (200), auf welchen mehrere ausgerichtet gepflanzte Pflanzen kultiviert werden, mit:
einem Schritt des Anordnens von Pflanzen, die auf einer Kulturmediumplatte (200) einer Transplantationsquelle in Gitterform angeordnet wurden, in einer Zickzackform auf einer Kulturmediumplatte (200) eines Transplantationsziels; und
einem anderen Schritt des Anordnens von Pflanzen, die auf einer Kulturmediumplatte (200) einer Transplantationsquelle in Zickzackform angeordnet wurden, in einer Gitterform auf einer Kulturmediumplatte (200) eines Transplantationsziels, wobei
beide zuvor beschriebenen Schritte abwechselnd ausgeführt werden.

10. Transplantationsverfahren nach Anspruch 9, **dadurch gekennzeichnet, dass** der eine Schritt vor dem anderen Schritt durchgeführt wird.

11. Transplantationsverfahren nach Anspruch 9 oder 10, **dadurch gekennzeichnet, dass** die Kulturmediumplatte (200) der Transplantationsquelle eine Tafel mit Verriegelungslöchern (21a, 22a, 23b) und Nicht-Verriegelungslöchern (21b, 22b, 23c), die in Gitterform oder in Zickzackform angeordnet sind, aufweist, und die Verriegelungslöcher (21a, 22a, 23b) und die Nicht-Verriegelungslöcher (21b, 22b, 23c) Stützelemente (25), welche einzelne Pflanzen stützen, verriegeln bzw. nicht verriegeln, und
wobei das Transplantationsverfahren ferner die Schritte des Anhebens der Tafel (21, 22, 23); und
des Transportierens der durch die Verriegelungslöcher (21a, 22a, 23b) gestützten Stützelemente (25) aufweist.

12. Transplantationsvorrichtung zum Durchführen von Transplantationen zwischen mehreren Kulturmediumplatten (200), auf welchen mehrere ausgerichtet gepflanzte Pflanzen kultiviert werden, mit:
einem Transplantationsmechanismus (1), der eine Pflanze aus einer Randbereichsseite der Kulturmediumplatte (200) der Transplantationsquelle zieht, sodann beginnt, von einer Mittelposition der Kulturmediumplatte (200) des Transplantationsziels zu transplantieren, und anschließend nacheinander in Richtung der Randbereichsseite transplantiert.

13. Transplantationsverfahren zum Durchführen von Transplantationen zwischen mehreren Kulturmediumplatten (200), auf welchen mehrere ausgerichtet gepflanzte Pflanzen kultiviert werden, mit
dem Schritt des Ziehens einer Pflanze aus einer Randbereichsseite der Kulturmediumplatte (200) der Transplantationsquelle, des nachfolgenden Beginnens des Transplantierens von einer Mittelposition der Kulturmediumplatte (200) des Transplantationsziels aus, und des anschließenden nacheinander erfolgenden Transplantierens in Richtung der Randbereichsseite.

## Revendications

1. Dispositif de transplantation réalisant une transplantation entre une pluralité de cartes de milieu de culture (200) cultivant une pluralité de plantes plantées de manière alignée, comprenant
un mécanisme de transplantation (1) transplantant les plantes, dans lequel
le mécanisme de transplantation (1) réalise en alternance une étape d'agencement de plantes ayant été agencées sous forme de grille sur une carte de milieu de culture (200) de source de transplantation, en une forme de zigzag sur une carte de milieu de culture (200) de destination de transplantation et une autre étape d'agencement de plantes ayant été agencées sous une forme de zigzag sur une carte de milieu de culture (200) de source de transplantation, en une forme de grille sur une carte de milieu de culture (200) de destination de transplantation.

2. Dispositif de transplantation selon la revendication 1, **caractérisé en ce que**
la une étape est réalisée antérieurement à l'autre étape.

3. Dispositif de transplantation selon la revendication 1 ou 2,
**caractérisé en ce que**
la carte de milieu de culture (200) inclut
un panneau (21, 22, 23) doté de trous de verrouillage (21a, 22a, 23b) et de trous de non-verrouillage (21b, 22b, 23c) qui sont agencés sous une forme de grille ou sous une forme de zigzag et
dans lequel
les trous de verrouillage (21a, 22a, 23b) et les trous de non-verrouillage (21b, 22b, 23c) verrouillant et ne verrouillant pas respectivement des organes de support (25) supportant des plantes individuelles, et
le mécanisme de transplantation (1) inclut
un ascenseur soulevant le panneau (21, 22, 23) de manière à transférer les organes de support (25) verrouillés dans les trous de verrouillage (21a, 22a, 23b).

4. Dispositif de transplantation selon la revendication 1 ou 2,
**caractérisé en ce que**
le mécanisme de transplantation (1) inclut :
une pluralité de moyens de tenue (160) tenant un organe de support supportant chaque plante ; et
un moyen d'entraînement (170) destiné à déplacer chaque moyen de tenue (160), et dans lequel
le moyen d'entraînement (170) déplace chaque moyen de tenue (160) en conformité avec un intervalle d'agencement des plantes dans la carte de milieu de culture (200) de destination de transplantation.

5. Dispositif de transplantation selon la revendication 4, **caractérisé en ce que**
le moyen d'entraînement (170) déplace chaque moyen de tenue (160) individuellement.

6. Dispositif de transplantation selon la revendication 5, **caractérisé en ce que**
le moyen d'entraînement inclut un moteur linéaire.

7. Dispositif de transplantation selon la revendication 4, **caractérisé en ce qu'**il comprend un mécanisme de liaison (167) liant chaque moyen de tenue (160) de telle sorte qu'un intervalle entre les moyens de tenue (160) devienne égal à l'intervalle d'agencement.

8. Dispositif de transplantation selon l'une quelconque des revendications 4 à 7, **caractérisé en ce que**
le mécanisme de transplantation (1) extrait une plante d'un côté portion de bord de la carte de milieu de culture (200) de source de transplantation, puis initie une transplantation depuis une portion centrale de la carte de milieu de culture (200) de destination de transplantation, puis réalise la transplantation successivement vers un côté portion de bord.

9. Procédé de transplantation réalisé entre une pluralité de cartes de milieu de culture (200) cultivant une pluralité de plantes ménagées de manière alignée, comprenant :
une étape d'agencement de plantes ayant été agencées sous une forme de grille sur une carte de milieu de culture (200) de source de transplantation, en une forme de zigzag sur une carte de milieu de culture (200) de destination de transplantation ; et
une autre étape d'agencement de plantes ayant été agencées sous forme de zigzag sur une carte de milieu de culture (200) de source de transplantation, en une forme de grille sur une carte de milieu de culture (200) de destination de transplantation, dans lequel
les deux étapes décrites ci-dessus sont réalisées en alternance.

10. Procédé de transplantation selon la revendication 9, **caractérisé en ce que**
la une étape est réalisée antérieurement à l'autre étape.

11. Procédé de transplantation selon la revendication 9 ou 10, **caractérisé en ce que**
la carte de milieu de culture (200) de source de transplantation comprend un panneau avec des trous de verrouillage (21a, 22a, 23b) et des trous de non-verrouillage (21b, 22b, 23c) qui sont agencés sous une forme de grille ou une forme de zigzag et les trous de verrouillage (21a, 22a, 23b) et les trous de non-verrouillage (21b, 22b, 23c) verrouillent et ne verrouillent pas respectivement des organes de support qui supportent chaque plante et
le procédé de transplantation comprend en outre des étapes de soulèvement du panneau (21, 22, 23) ; et
de transport des organes de support (25) qui sont supportés par les trous de verrouillage (21a, 22a, 23b).

12. Dispositif de transplantation réalisant une transplantation entre une pluralité de cartes de milieu de culture (200) cultivant une pluralité de plantes ménagées de manière alignée, comprenant :
un mécanisme de transplantation (1) extrayant une plante d'un côté portion de bord de la carte de milieu de culture (200) de source de transplantation, puis initiant une transplantation depuis une portion centrale de la carte de milieu de culture (200) de destination de transplantation, puis réalisant la transplantation successivement vers un côté portion de bord.

13. Procédé de transplantation réalisé entre des cartes de milieu de culture (200) cultivant une pluralité de plantes ménagées de manière alignée, comprenant :
une étape d'extraction d'une plante d'un côté portion de bord de la carte de milieu de culture (200) de source de transplantation, puis d'initiation d'une transplantation depuis une portion centrale de la carte de milieu de culture (200) de destination de transplantation, puis de réalisation de la transplantation successivement vers un côté portion de bord.
